# DEMANDE DE BREVET EUROPEEN

(11) **EP 2 792 536 A1**
(43) Date de publication de la demande: **22.10.2014**
(21) Numéro de dépôt: 14160979.2
(22) Date de dépôt: 20.03.2014
(51) Int. Cl.: B60L 11/18

(54) **Structure autoportée formant support pour station de charge et station de charge**

(30) Priorité: 16.04.2013 FR 1353413
(71) Demandeur: Bluecarsharing, 92420 Vaucresson (FR)
(72) Inventeur: Courtial, Clément, 91400 ORSAY (FR); Charrier, Bruno, 94500 CHAMPIGNY (FR)
(74) Mandataire: Pontet Allano & Associes

(57) **Abrégé**

L'invention a pour objet une structure autoportée (10) formant support d'une station de charge pour la recharge électrique de véhicules comprenant au moins une borne de charge, caractérisée en ce qu'elle comprend une paroi inférieure de support, une paroi supérieure sur laquelle sont aptes à être agencées la ou les bornes de charge, chacune à un emplacement (22A,22C,22E,22G,22H,22I,22K) de réception prédéterminé distinct, au moins une paroi latérale reliant les parois inférieure et supérieure sur tout le pourtour de la structure de façon à délimiter un espace intérieur fermé entre les parois inférieure et supérieure, un conduit d'entrée (24) d'au moins un câble, apte à être agencé sur la paroi supérieure de la structure, la paroi supérieure comprenant à cet effet un orifice d'entrée débouchant dans l'espace intérieur de ladite structure, et au moins un chemin de guidage des câbles ménagé dans l'espace intérieur de la structure, ce ou ces chemins étant configurés pour guider les câbles depuis l'orifice d'entrée vers le ou les emplacements (22A,22C,22E,22G,22H,22I,22K) de réception des bornes de charge.

## Description

L'invention concerne une station de charge pour recharger électriquement un véhicule électrique, à savoir un véhicule fonctionnant à l'aide d'un moteur électrique et alimenté par une batterie située à bord du véhicule, ainsi qu'une structure pour constituer une telle station.

On connaît déjà une station de charge de véhicules électriques, placée sur la voie publique et comprenant une pluralité de bornes de charge. Chaque borne de charge comprend des moyens de connexion électrique coopérant avec des moyens de connexion complémentaire du véhicule, afin de relier électriquement le véhicule au réseau électrique urbain auquel est bien entendu reliée la borne. La station peut également comprendre d'autres éléments fonctionnels tels qu'un panneau d'information et/ou une borne de location par exemple. Les différents éléments de la station de charge sont généralement enterrés dans le sol. Autrement dit, leur base est enterrée dans la dalle bétonnée constituant la voie publique.

Cette solution permet de relier facilement le réseau électrique urbain, déjà installé dans le sol, aux différents éléments fonctionnels de la station pour lesquels cela est nécessaire, de façon fiable et sécuritaire. Les câbles électriques d'alimentation des bornes sont de fait difficilement accessibles depuis l'extérieur et les stations ont une bonne durée de vie car les câbles ne peuvent donc pas être facilement endommagés, que ce soit par des nuisances d'origine naturelle (intempéries, rongeurs) ou du vandalisme.

Toutefois, dans certains lieux, tels que des parkings souterrains, dans lesquels la dalle bétonnée sur laquelle reposent les véhicules est d'épaisseur très réduite, il est difficile d'enterrer les bornes dans ladite dalle sous peine de la fragiliser.

On souhaite toutefois offrir la possibilité d'installer un dispositif fiable et sécuritaire dans des endroits tels que des parkings, dans lesquels il est difficile d'enterrer les différents éléments de la station de charge.

A cet effet, l'invention a pour objet une structure autoportée formant support d'une station de charge pour la recharge électrique de véhicules comprenant au moins une borne de charge, la structure comprenant :
- une paroi inférieure de support,
- une paroi supérieure sur laquelle sont aptes à être agencées la ou les bornes de charge, chacun à un emplacement de réception prédéterminé distinct,
- au moins une paroi latérale reliant les parois inférieure et supérieure sur tout le pourtour de la structure de façon à délimiter un espace intérieur fermé entre les parois inférieure et supérieure,
- un conduit d'entrée d'au moins un câble, apte à être agencé sur la paroi supérieure de la structure, la paroi supérieure comprenant à cet effet un orifice d'entrée débouchant dans l'espace intérieur de ladite structure, et
- au moins un chemin de guidage des câbles ménagé dans l'espace intérieur de la structure, le ou les chemins étant configurés pour guider les câbles depuis l'orifice d'entrée vers le ou les emplacements de réception des bornes de charge.

La structure selon l'invention permet donc de placer des bornes de charge dans des endroits dans lesquels les bornes ne peuvent pas être enterrées dans le sol. La structure autoportée forme en effet un support mécanique pour les bornes.

Ce support présente une bonne sécurité du point de vue électrique car il forme une structure fermée à l'intérieur de laquelle sont placés les câbles, ainsi difficilement accessibles depuis l'extérieur. En outre, les câbles sont amenés dans la structure par un point d'entrée situé en hauteur (extrémité supérieure du conduit d'entrée). Il n'y a donc aucun câble qui soit placé au sol et pourrait être endommagé par des passages répétés sur celui-ci, notamment par des véhicules, des nuisibles tels que des rongeurs, etc. Ils pourront également être bien plus difficilement atteints par des personnes mal intentionnées qui souhaitent endommager la station.

On notera en outre que la structure autoportée permet d'installer et également de désinstaller facilement la station sans devoir modifier significativement son environnement, dans le cas où on souhaite l'installer dans un parking déjà construit, changer sa localisation et/ou arrêter le service. Les coûts d'installation sont de ce fait également diminués.

La structure selon l'invention peut comprendre l'une ou plusieurs caractéristiques de la liste suivante :
- la structure est constituée d'une pluralité d'éléments, préférentiellement de dimensions standard assemblés, appelés pavés. La structure est alors un assemblage modulaire. On peut alors construire des stations de charge adaptées à différents environnements et besoins, comprenant un nombre variable de bornes, de distances entre les bornes, tout en utilisant des éléments standard. On diminue alors les coûts de conception et d'installation des stations de charge,
- chaque pavé comprend notamment une demi-coque supérieure, une demi-coque inférieure et éventuellement une structure de support disposée entre les deux demi-coques. Une telle structure permet une bonne résistance mécanique de chacun des pavés et un bon assemblage des pavés entre eux. De façon avantageuse, lorsque la structure autoportée comporte une pluralité de pavés, au moins deux pavés de la structure sont configurés de sorte qu'ils comprennent une demi-coque inférieure et éventuellement une structure de support identiques et une demi-coque supérieure, les deux demi-coques étant de configuration distinctes. Cela permet de diminuer les coûts de fabrication de la station puisque, pour deux pavés différents, aptes par exemple à porter des éléments fonctionnels différents, seule la demi-coque supérieure change. La plupart des éléments permettant la fabrication de la station de charge sont donc standard, limitant les coûts de fabrication de la structure tout en autorisant une grande flexibilité concernant la station,
- au moins un emplacement de réception d'une borne de charge comprend des moyens de fixation d'au moins un corps de borne de charge, ménagés sur la paroi supérieure de la structure. Elle peut également comprendre un support du corps de borne. Ce support peut notamment être conçu de sorte que le corps de borne est mobile en rotation relativement à la structure. Alternativement, le corps de borne peut être d'un seul tenant avec la structure. La structure peut comprendre également un emplacement et des moyens de fixation pour un autre type d'élément qu'une borne de charge, par exemple une borne de location ou un panneau d'affichage. Un tel élément peut aussi être d'un seul tenant avec la structure,
- le conduit d'entrée des câbles peut être rapporté à un emplacement prévu à cet effet sur la structure, la structure comprenant à cet effet des moyens de fixation du conduit au voisinage de l'orifice d'entrée et/ou être d'un seul tenant avec celle-ci. Il est de préférence haut d'au moins 2 mètres, de telle sorte que les câbles ne soient pas facilement atteignables avant leur entrée dans le conduit. De même l'entrée du conduit n'est pas facilement atteignable pour les nuisibles tels que les rongeurs. La hauteur du conduit est de préférence ajustée de sorte que le conduit soit en contact avec le plafond de l'étage du parking dans lequel il est destiné à être placé,
- un chemin de guidage de câbles est ménagé pour s'étendre longitudinalement dans la structure, essentiellement selon toute la dimension longitudinale de la structure. Il s'étend de préférence à au moins une, notamment chaque, extrémité transversale de la structure,
- lorsque la dalle comprend plusieurs pavés, chaque pavé comprend au moins un conduit longitudinal traversant le pavé au niveau de l'espace intérieur situé entre les parois supérieure et inférieure et ouvert à chacune de ses extrémités dite longitudinale, ledit conduit étant destiné à communiquer avec un conduit identique du pavé adjacent, le ou les conduits formant chacun une portion du chemin de guidage des câbles. Les conduits sont préférentiellement situés à chaque extrémité transversale de l'élément,
- le pavé comprend également dans certains cas une paroi d'extrémité fermant l'extrémité longitudinale du pavé à l'extérieur du ou des conduits. On utilise ainsi également la partie centrale de l'espace intérieur pour le passage des câbles, cette partie pouvant alors être en communication avec les conduits formant chemin de guidage. Cela permet de limiter les contraintes concernant la position de la borne de charge sur le pavé,
- un pavé peut être apte à porter une borne de charge, ou deux bornes de charge, et/ou un conduit d'entrée et/ou une borne d'un autre type. Il peut également ne comprendre aucune borne ou aucun autre élément fonctionnel et uniquement permettre de faire la liaison entre deux pavés porteurs de borne. On notera que la station réalisée à l'aide de mêmes pavés standard permet ainsi d'être modulable et de prendre en compte différentes configurations : station permettant d'alimenter électriquement une ou deux rangées de véhicules (les deux rangées étant alors situées de chaque côté de la structure), avec des emplacements de type bataille, épi ou en long. Les dimensions des différents pavés sont notamment choisies pour qu'une seule borne soit en regard de chaque emplacement de stationnement. Pour augmenter le caractère modulable de la structure, les pavés sont choisis pour être de dimension longitudinale inférieure à 1,5 mètre, notamment à 1 mètre.
- les parois inférieure et/ou supérieure et/ou latérale et/ou les parois délimitant le ou les chemins de guidage sont percées d'orifices d'aération, ce qui permet une meilleure évacuation de la chaleur au niveau des parois de la structure, la multitude de câbles présents dans celle-ci ayant tendance à dégager de la chaleur. Il est bien entendu que les dimensions des orifices sont choisies pour qu'on ne puisse pas pénétrer dans la dalle (notamment inférieures au centimètre).

L'invention a également pour objet une station de charge électrique pour véhicule électrique, une telle station comprenant :
- au moins une structure autoportée selon l'invention,
- au moins une borne de charge, la ou chaque borne de charge comprenant des moyens de connexion aptes à être électriquement reliés à des moyens complémentaires d'un véhicule électrique,
- au moins un conduit d'entrée s'étendant essentiellement verticalement et vers le haut depuis la paroi supérieure de la structure,
- une pluralité de câbles circulant dans la structure de façon à relier chacune des bornes de charge à un réseau électrique externe, les câbles étant agencés dans le conduit d'entrée et dans au moins un chemin de guidage ménagé dans l'espace intérieur de la structure.

Le conduit d'entrée et/ou chacune des bornes est rapporté sur la structure, qui comprend alors des moyens de fixation à cet effet, ou est d'un seul tenant avec celle-ci.

Le conduit d'entrée présente une hauteur de plus de 2 mètres, de préférence, afin d'éviter qu'une personne mal intentionnée puisse avoir accès aux câbles.

Les câbles circulent également dans un corps de borne de chacune des bornes de charge.

On va maintenant décrire à l'aide des figures annexées, qui représentent uniquement un exemple particulier de réalisation, des objets selon l'invention. Les figures sont les suivantes :
- la figure 1 représente une structure autoportée pour former une station de charge selon un mode de réalisation de l'invention,
- la figure 2 est une vue en perspective d'un détail de la structure de la figure 1,
- la figure 3 est une vue en perspective d'un pavé de la structure de la figure 1, montrant l'intérieur dudit pavé par transparence.

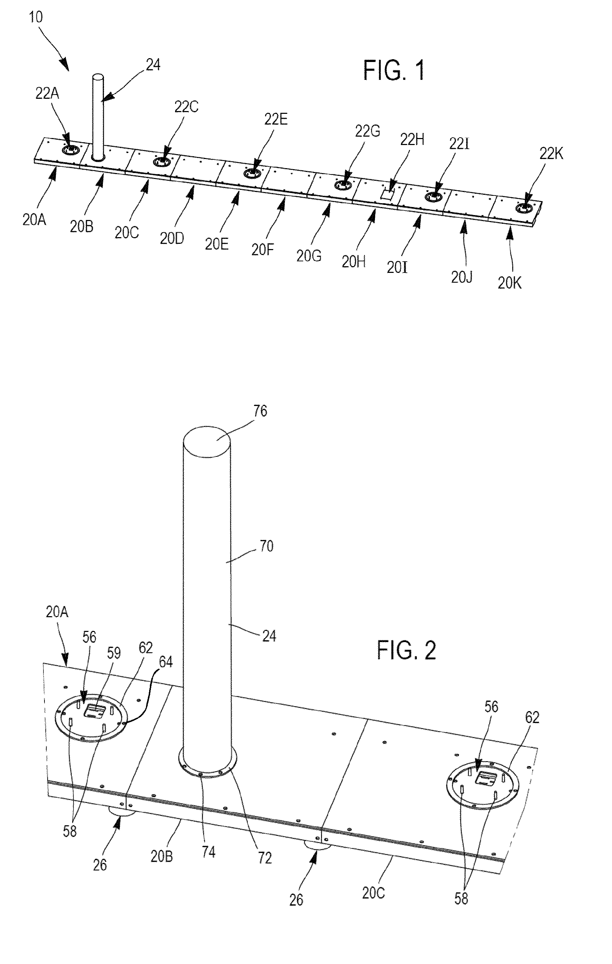

On a représenté sur la figure 1 une structure autoportée permettant de porter une station de charge selon l'invention.

La structure 10 est une structure modulaire constituée par une pluralité de pavés 20A - 20K, assemblés, les pavés étant tous assemblés les uns à la suite des autres selon une direction correspondant à la direction longitudinale de la structure. Certains des pavés 20A, 20C, 20E, 20G, 20I, 20K, sont destinés à supporter une borne de charge rapportée, au niveau de leur emplacement 22A, 22C, 22E, 22G, 22I, 22K comme on le décrira plus tard, alors qu'un autre pavé 20H est destiné à accueillir un autre élément fonctionnel tel qu'une borne de location rapportée, au niveau de son emplacement 22H. Un autre pavé 20B porte un conduit d'entrée 24 des câbles dans la structure, s'étendant vers le haut. La structure comprend également des pavés 20D, 20F, 20J qui ne sont destinés à porter aucun des éléments fonctionnels et forment entretoises entre les pavés dits « fonctionnels » pour pouvoir placer les bornes de charge en face des emplacements de stationnement adjacents correspondants.

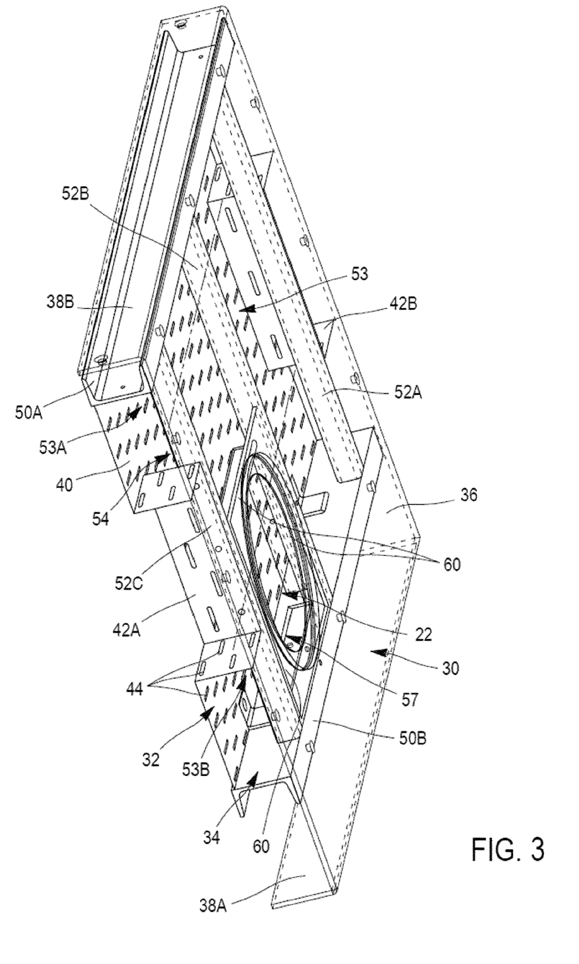

On va maintenant décrire la structure générale d'un pavé tel que le pavé 20A à l'aide de la figure 3. Comme on le voit, ce pavé comprend une demi-coque supérieure 30, une demi-coque inférieure 32 et une structure de support 34.

La demi-coque supérieure comprend une pièce en U formant la paroi supérieure 36 et deux parois latérales opposées 38A, 38B du pavé. Ces parois constituent les extrémités transversales du pavé.

La demi-coque inférieure 32 comprend la paroi inférieure 40 du pavé et, à chaque extrémité de la paroi inférieure, un rebord respectivement 42A, 42B s'étendant en saillie de la paroi inférieure au niveau des extrémités dites longitudinales du pavé, sur une partie de la dimension de la paroi inférieure selon cette direction. La paroi supérieure 36 de la demi-coque supérieure 30 repose également sur ces rebords. La demi-coque inférieure comporte une multitude d'orifices 44 de petites dimensions (de l'ordre du centimètre) permettant d'effectuer une aération de l'espace intérieur sans pour autant permettre l'entrée de nuisibles dans l'espace intérieur du pavé.

Une structure de support 48, constituée de deux profilés longitudinaux 50A, 50B, entre lesquels s'étendent des traverses 52A à 52C est également destinée à être insérée entre les demi-coques supérieure et inférieure. La structure 48 permet de solidariser ensemble les demi-coques supérieure et inférieure. Elle comprend pour cela des orifices de fixation situés en vis-à-vis d'orifices de fixation des demi-coques supérieure ou inférieure dans lesquels sont destinées à être insérées des vis. Grâce à ces différents éléments, un espace vide intérieur 54 est délimité respectivement par les profilés 50A, 50B de la structure 34, la paroi supérieure 36 de la demi-coque supérieure 32, la paroi inférieure 40 et les rebords 42A, 42B de la demi-coque inférieure 32. On notera que les profilés s'étendent sur toute la dimension longitudinale du pavé.

L'espace intérieur 54 est donc délimité par des parois supérieure, inférieure et deux parois latérales totalement fermées (ces parois latérales longeant les extrémités latérales du pavé) mais est ouvert au niveau de ses deux autres parois latérales (correspondant aux extrémités longitudinale du pavé, au niveau desquelles ce pavé est relié aux pavés adjacents de la station), les rebords 42A, 42B ne s'étendent pas sur toute la dimension transversale du pavé. Autrement dit, l'espace intérieur du pavé est configuré en H. Il comprend deux conduits longitudinaux 53A, 53B, placés respectivement à chaque extrémité transversale du pavé, et ouverts à chacune de leur extrémité longitudinale et un espace central 55 fermé à ses deux extrémité longitudinales par les rebords 42A, 42B et communiquant avec les deux conduits.

Les caractéristiques décrites ci-dessus sont communes à tous les pavés.

Le pavé décrit ici (qui pourrait correspondre au pavé 20C) comprend en outre au niveau de l'emplacement 22 pour accueillir une borne de charge un orifice 57, permettant d'accueillir un plateau mobile en rotation 56, visible sur la figure 2. Cet orifice est placé au-dessus de la partie centrale 55 de l'espace intérieur 54 du pavé. Le plateau 56 comprend des moyens de fixation 58 d'un corps de borne, ces moyens de fixation étant constitués d'une pluralité de vis. Ainsi, la borne peut être montée mobile en rotation relativement au pavé. Le plateau 56 comprend également un orifice 59 permettant le passage des câbles provenant de la structure dans le corps de borne.

Le plateau est soutenu dans l'orifice par le biais de quatre cornières linéaires 60 entourant l'orifice et reliées à face interne de la paroi supérieure 32, avec interposition d'une bague de glissement non représentée. Comme on le voit également sur la figure 2, une collerette 62 peut être placée sur la paroi supérieure 32 de façon à entourer l'orifice 57 tout en chevauchant le plateau 56. Cette collerette 62 comprend des orifices de fixation 64 qui lui permettent d'être vissée sur la paroi supérieure 32 afin de comprimer le plateau 56 et de le bloquer si nécessaire dans une position choisie.

Comme on le voit mieux sur la figure 2 montrant en détail les pavés 20A à 20C, les pavés sont assemblés au niveau de leurs extrémités longitudinales respectives, à l'aide d'orifices d'assemblage 26 situés chacun sur une face latérale et/ou une face supérieure du pavé, les orifices 26 adjacents de deux pavés adjacents étant destinés à être reliés par le biais d'une plaque d'assemblage. Les pavés peuvent également être assemblés par ce biais au niveau de leur paroi supérieure 32, à l'aide d'orifices visibles sur la figure 3.

Lorsque les pavés sont assemblés, les extrémités longitudinales de chaque pavé sont disposées côte à côte et les pavés sont reliés de sorte que les rebords 42A, 42B des pavés soient situés en regard l'un de l'autre et que les conduits respectifs 53A, 53B des pavés adjacents communiquent. Les conduits 53A, 53B assemblés forment donc un chemin de guidage des câbles s'étendant sur toute la dimension longitudinale de la structure autoportée. Les pavés sont toutefois assemblés de sorte que l'espace intérieur de la structure soit complètement fermé, les parois délimitant les deux conduits de deux pavés adjacents s'étendant dans le prolongement les unes des autres. On notera pour ce faire que les pavés 20A et 20K comprennent une extrémité longitudinale fermée (non représentée sur les figures) ce qui n'est pas le cas des autres pavés. La paroi d'extrémité longitudinale peut notamment être intégrée à la demi-coque supérieure ou bien rapportée sur la structure, par exemple une fois les pavés assemblés.

Le pavé 20B supporte quant à lui comme on l'a déjà indiqué un conduit 24 s'étendant vers le haut depuis la paroi supérieure du pavé 20B. Ce conduit 24 est rapporté sur le pavé 20B. Il comprend à cet effet, outre le corps du conduit 70, une collerette inférieure 72 munie d'orifices de fixation 74 destinés à accueillir des vis de fixation insérées d'une part dans la collerette et d'autre part dans la paroi supérieure du pavé 20B. Le conduit comprend une embouchure supérieure 76 et une embouchure inférieure, située en regard d'un orifice de la paroi supérieure du pavé 20B. Le conduit 24 communique ainsi avec l'espace intérieur du pavé 20B, au niveau de la partie centrale de cet espace intérieur. Le conduit présente une hauteur supérieure ou égale à 2 mètres pour éviter que l'on puisse atteindre facilement les câbles situés à l'intérieur du conduit.

Ainsi, les câbles circulent depuis l'extérieur vers l'espace intérieur de la structure en empruntant le conduit d'entrée 24. Ils sont ensuite répartis dans les chemins de guidage des câbles 53A, 53B et sont amenés jusqu'aux bornes correspondantes en empruntant les espaces centraux 55 puis traversent l'orifice 59 pour atteindre le corps des bornes et les moyens de connexion portés par celles-ci.

La structure selon l'invention présente de nombreux avantages :
- tout d'abord, elle permet d'installer la station en tout lieu sans avoir besoin de l'enterrer tout en protégeant les câbles électriques destinés à être amenés jusqu'aux bornes du vandalisme et des nuisances extérieures en offrant une structure fermée,
- ensuite, son aménagement modulaire à l'aide d'une pluralité de pavés, permet d'aménager des stations dans de nombreuses configurations à l'aide d'éléments standard. On notera que la dimension des différents pavés peut être inférieure à 1m50 voire à 1 mètre, pour augmenter la multiplicité des configurations possibles. En outre, la structure de support et la paroi inférieure peuvent être les mêmes pour tous les pavés alors que la demi-coque supérieure peut être modifiée en fonction des différentes configurations (pavés tels que 20A, 20B, 20D ou 20H).

On notera toutefois que la structure peut être différente de ce qui a été décrit tout en entrant toujours dans le cadre de l'invention. Elle peut par exemple être d'un seul tenant et ne pas comprendre une pluralité de pavés. Elle peut également comprendre d'autres éléments fonctionnels ou plus d'un élément fonctionnel par pavé, tel que deux plateaux pour bornes de charge, correspondant au cas où les emplacements sont face à face.

La forme des demi-coques supérieure et inférieure peut également varier ainsi que celle de la structure de support. On pourrait également imaginer que les pavés ou la structure autoportée n'est réalisée qu'en une ou deux et non en trois pièces. Le conduit d'entrée et/ou le corps de borne de charge peut également être d'un seul tenant avec la structure autoportée. Le corps de borne de charge n'est pas non plus forcément mobile relativement à la paroi supérieure.

## Revendications

1. Structure autoportée (10) formant support d'une station de charge pour la recharge électrique de véhicules comprenant au moins une borne de charge, **caractérisée en ce qu'**elle comprend :
- une paroi inférieure (40) de support,
- une paroi supérieure (36) sur laquelle sont aptes à être agencées la ou les bornes de charge, chacune à un emplacement (22) de réception prédéterminé distinct,
- au moins une paroi latérale (50A, 50B) reliant les parois inférieure et supérieure sur tout le pourtour de la structure de façon à délimiter un espace intérieur (54) fermé entre les parois inférieure et supérieure,
- un conduit d'entrée (24) d'au moins un câble, apte à être agencé sur la paroi supérieure de la structure, la paroi supérieure comprenant à cet effet un orifice d'entrée débouchant dans l'espace intérieur de ladite structure, et
- au moins un chemin de guidage (53A, 53B) des câbles ménagé dans l'espace intérieur de la structure, ce ou ces chemins étant configurés pour guider les câbles depuis l'orifice d'entrée vers le ou les emplacements (22) de réception des bornes de charge.

2. Structure selon la revendication précédente, constituée d'une pluralité d'éléments (20A-20K) de dimensions standard assemblés, appelés pavés.

3. Structure selon la revendication précédente, dans laquelle au moins l'un des pavés (20A, 20C, 20E, 20G, 20I, 20K) est apte à porter au moins une borne de charge.

4. Structure selon l'une quelconque des revendications 2 et 3, dans laquelle au moins l'un des pavés est dimensionné de sorte que sa dimension longitudinale soit inférieure à 1,5 mètre, notamment 1 mètre.

5. Structure selon l'une quelconque des revendications 2 à 4, dans laquelle au moins l'un des pavés comprend une demi-coque inférieure (32) et une demi-coque supérieure (30) et éventuellement une structure de support (34) disposée entre les demi-coques supérieure et inférieure.

6. Structure selon la revendication précédente, comprenant au moins deux pavés (20A-20K) comportant une demi-coque supérieure (32) et une demi-coque inférieure (30), et éventuellement une structure de support (34), les demi-coques inférieures, et le cas échéant les structures de support, desdits pavés étant identiques alors que les demi-coques supérieures d'au moins deux des pavés (20A ; 20B ; 20D ; 20H) sont de configurations distinctes.

7. Structure selon l'une quelconque des revendications précédentes, dans laquelle l'emplacement (22A-22K) de réception d'une borne de charge comprend des moyens de fixation d'au moins un corps de borne de charge, notamment un support (56) configuré de sorte que le corps de borne soit mobile en rotation relativement à la structure.

8. Structure selon l'une quelconque des revendications précédentes, comprenant des moyens de fixation (74) du conduit d'entrée, au voisinage de l'orifice d'entrée.

9. Structure selon l'une quelconque des revendications précédentes, dans lequel le ou l'au moins un des chemins de guidage de câbles (53A, 53B) est ménagé pour s'étendre longitudinalement dans la structure autoportée, essentiellement selon toute la dimension longitudinale de la structure.

10. Structure selon la revendication précédente en combinaison avec l'une des revendications 2 à 6, dans lequel chaque pavé (20A-20K) comprend au moins un conduit longitudinal (53A, 53B) traversant le pavé et ouvert à chacune de ses extrémités dite longitudinale, destiné à communiquer avec un conduit identique du pavé adjacent, chaque conduit formant une portion du chemin de guidage des câbles.

11. Structure selon l'une quelconque des revendications précédentes, dans laquelle les parois inférieure (40) et/ou supérieure (36) et/ou latérale et/ou les parois délimitant le ou les chemins de guidage sont percées d'orifices d'aération (44).

12. Station de charge de véhicules électriques **caractérisée en ce qu'**elle comprend :
- au moins une structure autoportée (10) selon l'une quelconque des revendications précédentes,
- au moins une borne de charge, la ou chaque borne de charge comprenant des moyens de connexion aptes à être électriquement reliés à des moyens complémentaires d'un véhicule électrique,
- au moins un conduit d'entrée (24) s'étendant essentiellement verticalement et vers le haut depuis la paroi supérieure de la structure, de hauteur notamment supérieure ou égale à 2 mètres,
- une pluralité de câbles circulant dans la structure de façon à relier chacune des bornes de charge à un réseau électrique externe, les câbles étant agencés dans le conduit d'entrée (24) et dans au moins un chemin de guidage (53A, 53B) ménagé dans l'espace intérieur (54) de la structure.
